# EUROPEAN PATENT SPECIFICATION

(11) **EP 1 966 350 B1**
(45) Date of publication and mention of the grant of the patent: **15.12.2010**
(21) Application number: 06841616.3
(22) Date of filing: 22.12.2006
(51) Int. Cl.: C10G 11/04, C10G 51/02, C10G 69/04, B01J 23/00, B01J 27/236, B01J 21/00

(54) **FCC PROCESS WITH BASIC CATALYST**
FCC VERFAHREN MIT BASISCHEM KATALYSATOR
PROCEDE FCC AVEC CATALYSEUR BASIQUE

(30) Priority: 22.12.2005 EP 05112841
(43) Date of publication of application: 10.09.2008
(60) Divisional application: 10005846.0
(73) Proprietor: Albemarle Netherlands BV, 3818 LH Amersfoort (NL)
(72) Inventor: O'CONNOR, Paul, NL-3871 KM Hoevelaken (NL); YUNG, King Yen, 1321 AA Almere (NL); CANOS, Avelino Corma, Valencia 46020 (ES); DE GRAAF, Elbert Arjan, 1066 AP Amsterdam (NL); RAUTIAINEN, Erja, Päivi, Helena, NL-3833 KJ Leusden (NL)
(74) Representative: Schwabe - Sandmair - Marx
(86) International application number: PCT/EP2006/070204
(87) International publication number: WO 2007/082629

(56) References cited:
- EP-A- 0 278 535
- WO-A-95/03882
- US-A- 3 904 550
- US-A- 4 093 536
- US-A1- 2005 121 363
- US-B1- 6 447 741
- US-B1- 6 497 811
- US-B1- 6 797 155

## Description

### Background of the Invention

Crude oil is a complex mixture of hydrocarbons. In a refinery, crude oil is subjected to distillation processes to make a first separation by boiling point. One of the main fractions obtained in this process is Vacuum Gas Oil (VGO), which is commonly treated further in a cracking process, in particular a fluid catalytic cracking (FCC) process. Other feedstocks for cracking process include hydrotreated VGO and atmospheric resid.

Cracking is the process by which the relatively large molecules in a feedstock such as VGO are converted to lighter fractions. This may be done by heating the VGO under non-oxidizing conditions, so-called thermal tracking. If done in the presence of a catalyst, the cracking process may be carried out at a lower temperature.

Almost all catalytic cracking is presently carried out in a fluid catalytic cracking process, or FCC process. In this process small particles of catalytic material are suspended in a lifting gas. The feedstock is sprayed onto the catalyst particles through a nozzle. The feedstock molecules are cracked on the catalyst particles. Products and catalyst particles are carried by the lift gas through the reactor. After the reaction the catalyst particles are separated from the reaction products, and sent to a stripping section where the catalyst is subjected to a severe steam treatment to remove as much of the hydrocarbon molecules as possible. After the stripper the catalyst particles are transferred to a regenerator where coke that was formed during the reaction is burned off, and the catalyst is regenerated for further use.

The catalyst in a standard FCC process comprises an acidic zeolite, such as Y-zeolite or a stabilized form of a Y-zeolite. Generally, the Y-zeolite is combined with a matrix material, which may be alumina or silica-alumina. The catalyst may further comprise components for improving its resistance against poisoning by metal contaminants of the feedstock, in particular nickel and vanadium. Other components may be present to capture sulfur from the feedstock. The actual cracking process takes place on the acidic sites of the zeolite and of the matrix.

The product of the FCC process is subsequently split into several fractions. Dry gas is a low molecular weight fraction that does not liquefy when compressed at ambient temperature (hence the term dry). The dry gas comprises hydrogen, methane, ethane and ethene. The liquefied petroleum gas fraction consists of compounds that are in the gas form at room temperature, but liquefy when compressed. This fraction comprises predominantly propane, propene, butane, and its mono- and di-olefins.

The gasoline fraction may have a boiling point range of from about the boiling point of nC₅ (36 °C) to about 220 °C The endpoint may be varied to meet specific objectives of the refining process. The gasoline fraction forms the basis of commercial gasoline sold as a fuel for vehicles equipped with an Otto engine. One of the main requirements for the gasoline fraction is that it has as high and octane number as possible. Straight-chain hydrocarbons have a low octane number; branched-chain hydrocarbons have a higher octane number, with the octane number further increasing with the number of alkyl groups. Olefins have a high octane number, and aromatics have an even higher octane number.

The light cycle oil fraction, or LCO fraction, forms the basis for fuel oil. It is the fraction having a boiling point above that of the gasoline fraction and lower than about 340 °C. Hydrotreatment is required to convert the LCO to diesel fuel.

The quality of the LCO, in terms of its nitrogen content, its sulfur content and its aromatics content, determine the rate at which the LCO fraction may be blended into the feed that will be converted to diesel fuel in the hydrotreatment process. It is important for diesel fuel to have as high a cetane number as possible. Straight-chain hydrocarbons have a high cetane number; branched-chain hydrocarbons, olefins and aromatics have very low cetane numbers.

The product fraction having a boiling point above 340 °C is referred to as "bottoms". Although it is desirable to operate at the highest possible conversion, the composition of the product mix is adversely affected by operating at high conversion rates. For example, the coke yield increases as the conversion increases. Coke is a term describing the formation of carbon and pre-carbon deposits onto the catalyst. Up to a point, the formation of coke is essential to the cracking process as it provides the energy for the endothermic cracking reaction. A high coke yield is, however, undesirable, because it results in a loss of hydrocarbon material and disruption of the heat balance as burning off of the coke produces more heat than the process requires. Under these conditions it may be necessary to release part of the produced heat, for example by providing a catalyst cooling device in the regenerator, or to operate the process in a partial combustion mode.

The fraction of the bottoms having a boiling point between about 340 and 496 °C is referred to as heavy cycle oil, or HCO.

In general the most desirable fractions of the FCC products stream are the light olefins, the gasoline fraction, and the LCO fraction. The desired split between the last two is determined by the ratio between the number of diesel powered vehicles and gasoline powered vehicles, and by the seasonal demand for heating fuel.

Because of the need for a high cetane number, it is desirable to keep the amount of aromatics in the light cycle oil fraction as low as possible. In terms of their boiling points, a large portion of any aromatics formed will end up in the light cycle oil fraction. It is therefore desirable to minimize the amount of aromatics that is formed in the cracking process.

Lighter aromatics, such as benzene and toluene, become part of the gasoline fraction of the product stream. Because of their high octane numbers, the aromatic components of gasoline might be considered desirable. However, because of a growing concern about the toxicity of aromatic compounds, it has become desirable to form a gasoline fraction that is low in aromatics content. The octane number of the gasoline pool of the refinery can be increased by alkylation of the butylenes and the isobutane streams from the FCC. Additional butane may be needed from other refinery processes. The high quality alkylate has also a desirable very low aromatics content, thereby reducing the aromatics content of the total gasoline pool.

US 2005/0121363 (Vierheilig et al.) discloses an FCC process wherein hydrotalcite-like compounds are used as an additive for reducing sulfur in gasoline. The hydrotalcite-like compounds are used in combination with an acidic zeolite, such as E-cat.

US 3,904,550 (Pine) discloses a catalyst support comprised of alumina and aluminum phosphate. The support is used for catalysts useful in hydrodesulfurization and hydrodenitrogenation processes. The support material may also be combined with acidic zeolitic materials for use in hydrocracking or catalytic cracking.

US 4,093,536 discloses an FCC process wherein a feedstock is contacted with a catalyst consisting of Mn₂O₇/MgO or R₂O₇/CaO.

It is desirable to develop a catalyst for use in a cracking process for the cracking of FCC feed stock whereby the formation of aromatics is reduced as compared to conventional FCC processes. It is a particular objective of the present invention to provide a cracking process producing a light cycle oil fraction having a low aromatics content.

### Summary of the invention

The present disclosure describes a catalytic composition for use in an FCC process, said catalytic composition having basic sites and, optionally, acidic sites, with the proviso that, if that catalyst comprises both acidic and basic sites, the number of basic sites is significantly greater than the number of acidic sites. The catalytic composition is substantially free of acidic zeolite.

The present invention is an FCC process as defined in claim 1

Another aspect of the present invention is a two-stage cracking process as defined in claim 11. In one embodiment, in the first stage cracking conditions are set to minimize the formation of aromatics and maximize the yield of LCO. In the second stage bottoms conversion is maximized. The net effect will be a high yield of low aromatics LCO. The process set-up is very flexible, by changing operating conditions the unit can be changed from maximum distillate mode to maximum gasoline+LPG mode.

The catalyst used can be above mentioned conventional standard acidic zeolite, such as Y- zeolite or a stabilized form of a Y-zeolite, containing FCC catalysts. Preferably, the Y-zeolite is combined with a matrix material, which may be alumina or silica-alumina. Optionally the catalyst may further comprise components for improving its resistance against poisoning by metal contaminants of the feedstock, in particular nickel and vanadium. Other components may be present to capture sulfur from the feedstock. This conventional catalyst is characterized by high cracking activity and promotes hydrogen transfer causing aromatic formation in the gasoline and LCO boiling range.

In a preferred embodiment of the two-stage cracking process the catalyst is the catalytic composition as defined herein.

### Brief description of the drawing figures.

Figure 1 shows a two-stage FCC cracking process for maximum LCO yield and maximum cetane number.
Figure 2 shows the conversions and yield structures of two different feedstocks in the two-stage FCC process.
Figure 3 shows the aromatic contents of different product streams obtained in the two-stage FCC process.

### Detailed description of the invention

The present invention is based on the discovery that a catalyst having basic sites catalyzes the cracking reaction via a radical, or one-electron, mechanism. This is similar to the mechanism as occurs in thermal cracking. The difference with thermal cracking is that the presence of a catalyst increases the rate of reaction, making it possible to operate at lower reaction temperatures as compared to thermal cracking.

For use in the present invention, the catalytic composition comprising a basic material is substantially free of acidic zeolite. The term "catalytic composition" as used herein refers to the combination of catalytic materials that is contacted with an FCC feedstock in an FCC process. The catalytic composition may consist of one type of catalytic particles, or may be a combination of different types of particles. For example, the catalytic composition may comprise particles of a main catalytic material and particles of a catalyst additive. The combined composition is substantially free of acidic zeolite.

The catalytic compositions of the present invention provide a conversion of FCC feed stock of at least 10% at a catalyst-to-oil (CTO) ratio of 10 and a contact temperature below 700 °C. Conversion is defined as (dry gas) + (LPG) + (Gasoline) + (Coke) = 100 - (Bottoms) - (LCO). Preferably the conversion is at least 20%, more preferably at least 30%.

The conversion, as defined above, should not exceed 70%, and preferably should be less than 60%, more preferably less than 55%.

By contrast, the traditional FCC processes use an acidic material, commonly an acidic zeolite, as the cracking catalyst. The acidic sites of the catalyst catalyze the cracking reaction via a two-electron mechanism. This mechanism favors the formation of high molecular weight olefins, which readily become cyclized to form cycloalkanes. The cycloalkanes in turn readily become dehydrogenated to form aromatic compounds.

This dehydrogenation reaction involves hydrogen transfer to olefins in the product mixture, thereby reducing the yield of desirable compounds such as propylene.

The reaction catalyzed by a basic catalyst is believed to proceed via a one-electron mechanism. This may be the reason why the formation of aromatics is reduced as compared to the cracking reaction catalyzed by an acidic catalyst. Thermal cracking also proceeds via a one-electron mechanism. However, thermal cracking requires very high temperatures, which thermodynamically favors the formation of aromatics as well as excessive coke. The purpose of the present invention is to provide catalytic compositions that permit "thermal" cracking to be carried out at riser exit temperatures below 600 °C, preferably below 550 °C, most preferably below 500 °C. The actual reaction temperatures are higher than the riser exit temperatures. In so-called millisecond riser cracking the reaction temperature may need to be as high as 800 °C.

It is possible to have a catalytic composition that has, in addition to its basic catalytic sites, also acidic sites. It may even be desirable to provide acidic sites to increase the overall catalytic activity of the catalyst. If acidic sites are present, however, the number of basic sites must be greater than the number of acidic sites. Also, the acidic sites are not present in the form of acidic zeolitic material.

Methods for titrating the acidic sites and the basic sites of solid materials are described in "Studies in Surface Science and Catalysis, 51: New Solid Acids and Bases", K. Tanabe, M. Misono, Y. Ono, H. Hattori, Kodansha Ltd. Tokyo (co-published by Kodansha Ltd. Tokyo and Elsevier Science Publishers B.V., Amsterdam) (hereinafter referred to as "Tanabe").

The benchmark material is silica which, in the absence of additives or dopants, is considered "neutral" for purposes of the present invention. Any material having a more basic reaction to an indicator of the type described in Tanabe is in principle a basic material for purposes of the present invention.

As is clear from Table 2.4 of Tanabe, a solid material may have both basic and acidic sites. Basic materials suitable for the catalytic compositions of the present invention are those that have more basic sites than they possess acidic sites. The basic materials of the present invention may be mixed with acidic materials, provided that the sum total of basic sites of the composition is greater than the sum total of acidic sites.

Acidic zeolites as are commonly used in conventional FCC catalysts have so many strong acidic sites that, when used in even small amounts in combination with a basic material, the resulting catalyst is predominantly acidic. The catalytic compositions of the present invention do not contain an acidic zeolite.

Materials suitable for use as catalytic compositions in the present invention include basic materials (both Lewis bases and Bronstedt bases), solid materials having vacancies, transition metals, and phosphates. It is desirable that the materials have a low dehydrogenating activity. Preferably, the catalytic compositions of the present invention are substantially free of components having a dehydrogenating activity. For example, it has been discovered, that compounds of several transition metals tend to have too strong a dehydrogenation activity to be useful in this context. Although they may possess the required basic character, the dehydrogenation activity of these materials results in an undesirably high coke yield and formation of too much aromatics. As a general rule, transition metals that tend to be present in or convert to their metallic state under FCC conditions have too high a dehydrogenation activity to be useful for the present purpose.

The basic material may be supported on a suitable carrier. For this purpose the basic material may be deposited on the carrier by any suitable method known in the art.

The carrier material may be acidic in nature. In many cases the basic material will cover the acidic sites of the carrier, resulting in a catalyst having the required basic character. Suitable carrier materials include the refractory oxides, in particular alumina, silica, silica-alumina, titania, zirconia, and mixtures thereof. The preferred carrier is alumina.

Suitable basic materials for use in the catalytic compositions of the present invention include compounds of alkali metals, compounds of alkaline earth metals, compounds of trivalent metals, compounds of transition metals, compounds of the Lanthanides, and mixtures thereof.

Suitable compounds include the oxides, the hydroxides and the phosphates of these elements.

A class of materials preferred as basic materials in the catalytic compositions of the present invention are mixed metal oxides, mixed metal hydroxides, and mixed metal phosphates. Cationic and anionic layered materials are suitable as precursors to mixed metal oxides.

Another class of preferred basic materials for the present invention are compounds of transition metals, in particular the oxides, hydroxides and phosphates. Preferred are compounds of transition metals that do not have a strong dehydrogenation activity. Examples of suitable materials include ZrO₂, Y₂O₃, and Nb₂O₅.

A preferred class of materials for use as basic catalytic compositions in the present invention are anionic clays, in particular hydrotalcite-like materials. In hydrotalcite-like anionic clays the brucite-like main layers are built up of octahedra alternating with interlayers in which water molecules and anions, more particularly carbonate ions, are distributed.

The interlayers may contain anions such as NO₃⁻, OH⁻, Cl⁻, Br⁻, l⁻, SO₄²⁻, SiO₃²⁻, CrO₄²⁻, BO₃²⁻, MnO₄⁻, HGaO₃²⁻, HVO₄²⁻, ClO₄⁻, BO₃²⁻, pillaring anions such as V₁₀O₂₈⁶⁻, monocarboxylates such as acetate, dicarboxylates such as oxalate, alkylsulfonates such as laurylsulfonate.

"True" hydrotalcite, that is hydrotalcites having magnesium as the divalent metal and alumina as the trivalent metal, is preferred for use in the present invention.

The catalytic selectivity of a hydrotalcite-like material (including hydrotalcite itself) may be improved by subjecting the hydrotalcite to heat deactivation. A suitable method for heat deactivating a hydrotalcite material comprises treating the material in air or steam for several hours, for example five to 20 hours, at a temperature of from 300 to 900 °C. Heating causes the layered structure to collapse and amorphous material to be formed. Upon continued heating, a doped periclase structure is formed, in which some of the Mg²⁺ sites are filled with Al³⁺. In other words, vacancies are formed, which have been found to improve the selectivity of the catalytic material.

Extreme heat treatment will cause this material to segregate into a periclase and a spinel structure. The spinel structure is inactive as a catalyst. Significant spinel formation has been observed after heating a hydrotalcite material for four hours at 900°C.

Another preferred class of basic materials is the aluminum phosphates. Although certain aluminum phosphates are acidic, their properties can be modified with metal dopants. It will be understood that the aluminum phosphates suitable for use herein are those having a basic character, either as-is, or as a result of the addition of suitable dopants.

The activity and the selectivity of the above-mentioned materials may be adjusted by doping these materials with another metal. In general, most transition metals are suitable dopants for use in this context. Notable exceptions include those transition metals that have a dehydrogenating activity, such as nickel, and the platinum group metals. Fe and Mo have also been found to be unsuitable,

Preferred dopants include metal cations from Groups IIb, IIIb, IVb of the Periodic Table of elements, and the rare earth metals. Specifically preferred dopants include La, W, Zn, Zr, and mixtures thereof.

As mentioned previously, the catalytic compositions of the present invention may further comprise an acidic material, provided that the overall character of the catalyst remains basic. The presence of a material having acidic sites may be desirable in terms of improving the overall activity of the catalyst. Silica-magnesia is an example of a material having both basic and acidic sites. If more than 40% of the sites are acidic the overall character of the material tends to become acidic.

Suitable materials having acidic sites include silica sol, metal doped silica sol, and nano-scale composites of silica with other refractory oxides. Acidic zeolites are not suitable for incorporation into the catalytic materials of the present invention, because the acidic character of acidic zeolites is so strong as to easily overwhelm the basic character of the catalyst. For this reason the catalytic compositions of the present invention comprise less than 3 wt% acidic zeolite, and are preferably substantially free of acidic zeolite.

A suitable method for preparing a catalyst having a high attrition resistance is described in US Patent 6,589,902 to Stamires et al., the disclosures of which are incorporated herein by reference.

The catalytic compositions of the present invention preferably have a relatively high specific surface area, to compensate for their activity being lower than that of conventional FCC catalysts. Preferably the catalytic compositions have a specific surface area as measured by the BET method after steam deactivation at 788 °C, for 5 hours of at least 60 m²/g, preferably at least 90 m²/g.

The present invention is an FCC process comprising the step of contacting an FCC feed stock with the catalytic composition of the present invention under FCC reaction conditions. The FCC feed stock may be VGO, hydrotreated VGO, atmospheric resid, the atmospheric resid feed, crude oil, shale oil, tar sand, and mixtures thereof.

The term "FCC process" as used herein refers to process conditions that are typical for conventional FCC processes. Specifically, the reaction temperature in the riser is less than about 600 °C, preferably less than 550 °C, more preferably less than 510 °C; the total pressure is less than 5 bar, with the hydrogen partial pressure being less than the total pressure: The conversion is less than 70%.

It will be understood that the term FCC process does not encompass hydrotreatment processes, which require elevated hydrogen pressures on the order of 100 bar or more. The term FCC process also does not encompass steam pyrolysis, which is carried out at temperatures above 600 °C, and results in a conversion of more than 90%, typically (close to) 100%.

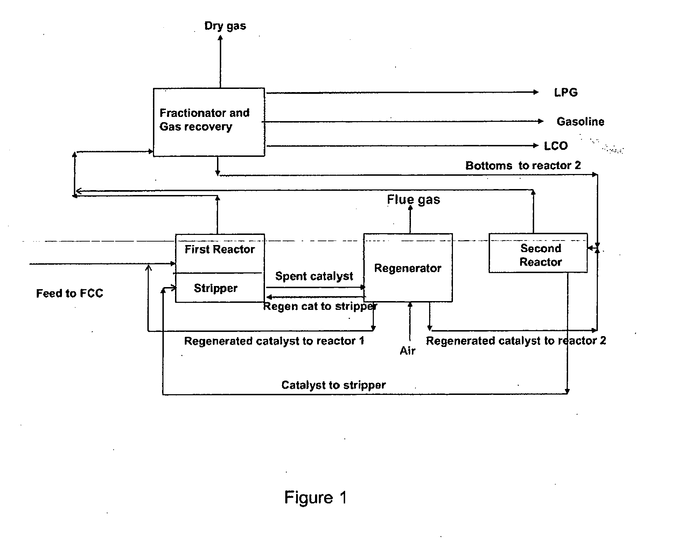

Another aspect of the present invention is a two-stage cracking process as illustrated in Figure 1. The FCC feedstock may be, amongst others, VGO, hydrotreated VGO, atmospheric resid, hydrotreated vacuum resid, vacuum resid, hydrotreated vacuum resid, coker gasoil and hydrotreated coker gasoils, crude oil, shale oil, tar sand, and mixtures thereof. Preferred feedstocks are VGO and atmospheric resid.

The first stage is preferably performed at low cracking temperature as then the LCO yield is maximized while its aromatics content is minimized. The aromatics content of the bottoms from the first stage is low and they can be easily cracked in a second stage. This can be done by recycling to the first stage, but more preferably the bottoms of the first stage are cracked in a second stage at a higher temperature than in the first stage. In this way the conversion of the FCC feed, the LCO yield and LCO cetane number are maximized.

The temperature in the first cracking stage should be kept as low as possible to reduce the formation of aromatics. In a conventional FCC unit stripping of the hydrocarbon vapors deteriorates, as the cracking temperature is reduced because the stripping temperature is completely determined by the cracking temperature. If stripping becomes unacceptably low, hydrocarbon breakthrough to the regenerator occurs, which will cause temperature runaway and excessive catalyst deactivation. To enable a low cracking temperature without sacrificing stripping in the preferred embodiment facilities are provided to increase stripping temperature by routing some hot regenerated catalyst to the stripper bed.

In this two-stage process at least one of the two stages is carried out in an FCC reactor. One of the stages may be carried out in a coker, or in a hydrocracking unit. In a preferred embodiment both stages are carried out in an FCC unit.

The catalysts used in the two stages may be the same, or may be different, provided that the process comprises at least one FCC stage in which the catalytic composition of the present invention is used. For example, one stage may be carried out with a conventional, zeolite-comprising catalyst, while the other stage is carried out with the catalytic composition of the present invention. It is preferred that the catalyst of the first stage is the catalytic composition of the present invention.

Preferably only the bottoms product of the first stage is subjected to the second stage cracking process. To this end, the product of the first stage is subjected to a separation step whereby the bottoms product is separated from the other fractions (gasoline, LCO, dry gas, etc.). In one embodiment the bottoms product of the first stage is simply mixed with the feed to the first stage. In this embodiment the second stage consists of a recycle stream of bottoms product from the first stage into the feed of the reactor.

In a preferred embodiment the second stage is carried out in a separate reactor. This has the advantage that the second stage can be carried out under reaction conditions that are different from those of the first stage. Specifically, it is desirable to carry out the first stage at a lower reaction temperature than the second stage. By way of example, if both stages are FCC reactors, the first stage could be carried out at a reaction temperature in the range of 460 to 500 °C, and the second stage at a reaction temperature in the range of 530 to 570 °C. If one of the stages is a hydrocracking process, it is understood that this stage will be carried out under conditions known in the art in terms of partial hydrogen pressure, reaction temperature, contact time, etc.

As mentioned above, the two stages could employ the same or different catalysts. The advantage of using the same catalyst in both stages is that both catalysts can be stripped and regenerated in a common stripper and regenerator, which reduces the capital investment required for this process. On the other hand, the use of different catalysts in the two stages increases the flexibility of the process and allows for further optimization in terms of bottoms yield and aromatics content of the various product streams.

As in conventional FCC processes, hydrocarbons are stripped off the catalyst In the stripper. Next, coke formed on the catalyst is burned off in the regenerator. Hot catalyst material is recycled into the reactor. It may be desirable to adjust the stripper temperature between 520 to 600 °C by routing some catalyst from the regenerator to the stripper.

According to the present invention a the gasoline fraction may be obtained with the process of this invention. The gasoline fraction is characterized in having a low aromatics content as compared with the gasoline fraction obtained with a conventional FCC process.

A further aspect of the present disclosure is the LCO fraction obtained with the process of this invention, The LCO fraction is characterized in having a low aromatics content as compared with the gasoline fraction obtained with a conventional FCC process.

A further aspect of the present disclosure is the heavy cycle oil (HCO) fraction obtained with the process of this invention. The HCO fraction is characterized in having a low aromatics content as compared with HCO fraction obtained with a conventional FCC process.

A further aspect of the present disclosure is the gasoline fraction obtained with the process of this invention. The HCO fraction is characterized in having a low aromatics content as compared with the gasoline fraction obtained with a conventional FCC process.

### Examples

In the following examples the catalytic selectivity of several basic catalytic compositions according to the present invention is compared to that of a commercially available acidic FCC catalyst.

The commercially available FCC catalyst was a conventional Y-zeolite catalyst with an alumina matrix.

### Composition FCC catalyst:

| | |
|---|---|
| Al₂O₃ (wt%) | 37.5 |
| SiO₂ (wt%) | 57.0 |
| Na₂O (Wt%) | 0.35 |
| RE₂O₃ (wt%) | 2.55 |
| Fe₂O₃ (wt%) | 1.02 |
| TiO₂ (wt%) | 0.52 |
| Sb (ppm) | 416 |
| Ni (ppm) | 1767 |
| V (ppm) | 1988 |

### Physical properties FCC catalyst:

| | |
|---|---|
| AAI | 3.5 |
| SA-BET (m²/g) | 152 |
| SA-Meso (m²/g) | 53 |
| PV-micro (ml/g) | 0.046 |

Hydrotalcite was prepared following the procedure described in US Patent 6,589,902. The Mg to Al ratio was 4:1. The hydrotalcite was calcined at 600 °C for one hour.

As desired, metal ions were impregnated into the hydrotalcite by rehydrating the calcined hydrotalcite in an aqueous solution containing a salt of the desired metal.

Clay was kaolin clay obtained from Thiele Kaolin Company of Sandersville, GA (USA). The clay was calcined at 1000 °C

Aluminum phosphate materials were prepared as described in US Patent 6,797,155 B1. After precipitation at a pH in the range of 7-12, the precipitate was aged at 100 to 200 °C for up to 2 days.
The precipitate was separated from the liquid by filtration, then dried, and calcined at 540 °C. As desired, the aluminum phosphate was modified by metal impregnation, as described above for hydrotalcite.

The catalytic activity and selectivity of the various materials was in a micro-activity reactor. As feed stock Kuwait VGO was used. All test reactions were performed at a contact temperature of 500 °C.

### Characteristics of Kuwait VGO

| SIMDIST | °C |
|---|---|
| 5wt% | 360 |
| 10wt% | 374 |
| 20wt% | 396 |
| 30wt% | 415 |
| 40wt% | 432 |
| 50wt% | 450 |
| 60wt% | 470 |
| 70wt% | 489 |
| 80wt% | 511 |
| 90wt% | 537 |
| 95wt% | 559 |
| SATURATES, wt% | 60.0 |
| MONO-AROMATICS, wt% | 16.0 |
| DI-AROMATICS, wt% | 10.1 |
| DI+-AROMATICS/POLARS, wt% | 14.8 |
| | |
| SULFUR, ppmwt | 29040 |
| NITROGEN, ppmwt | 996 |
| CCR, wt% | 0.54 |

The reaction product was subjected to distillation. The light cycle oil fraction (LCO fraction) was separated and analyzed for total aromatics content using calibrated gas chromatography. The coke yield was determined by analyzing the CO and CO₂ contents of the effluent of the regenerator under oxidizing conditions.

### Example 1

The commercial FCC catalyst, a sample of the clay material, and a sample of the hydrotalcite material were tested in the test reactor described above. The feed conversion rate was varied by varying the catalyst-to-oil (CTO) ratio. For each test run the reaction product was collected. The LCO fraction was analyzed for aromatics content. Standard LCO cutpoint of 221 to 350 °C was used. The results are summarized in Table 1.

**Table 1**

| | Clay | HTC | FCC Catalyst | Clay | HTC | FCC Catalyst |
|---|---|---|---|---|---|---|
| Bottoms yield, wt% | 30 | 30 | 30 | 20 | 20 | 20 |
| LCO Aromatics content, wt% | 58 | 42 | 58 (*) | 60 | 45 | 70 |

| | | | | | | |
|---|---|---|---|---|---|---|
| (*) estimate | | | | | | |

Both the clay material and the hydrotalcite material produced an LCO fraction with significantly lower aromatics content than that produced by the conventional FCC catalyst.

Decreasing the bottoms yield by increasing the CTO ratio dramatically increased the aromatics content of the LCO fraction in the case of the conventional FCC catalyst. For example the aromatics content of LCO increased from 70 wt% to above 90 wt% when the bottoms yield dropped from 20 to 10 wt%.

The increase in aromatics was more modest for the clay and hydrotalcite materials. Within the bottoms yield range of 60 to 20 wt% only a very moderate increase in LCO aromatics content was observed.

The performance of Si-Mg, a conventional FCC catalyst, and the Mg/Al hydrotalcite were compared. The results are presented in table 2.

**Table 2**

| | Si-Mg | Si-Mg | Si-Mg | FCC | FCC | FCC | HTC | HTC | HTC | HTC |
|---|---|---|---|---|---|---|---|---|---|---|
| CTO | 3.49 | 5.99 | 9.98 | 3.49 | 5.99 | 9.98 | 3.49 | 5.99 | 9.98 | 19.86 |
| Gasoline | 36.71 | 47.00 | 49.24 | 46.79 | 49.76 | 46.63 | 8.91 | 13.08 | 19.35 | 25.28 |
| LCO | 31.50 | 25.14 | 22.00 | 23.77 | 17.72 | 12.18 | 25.79 | 28.32 | 31.62 | 31.11 |
| Bottoms | 21.21 | 7.22 | 3.17 | 8.03 | 4.50 | 2.98 | 57.47 | 47.88 | 33.57 | 21.36 |
| Coke | 3.95 | 6.47 | 8.88 | 4.33 | 7.24 | 10.97 | 4.36 | 6.35 | 9.08 | 12.32 |
| LCO/arom | 48.18 | 59.68 | 64.38 | 66.07 | 81.00 | 94.51 | 34.24 | 36.04 | 38.05 | 41.39 |
| HCO/arom | 33.09 | 52.05 | 68.43 | 67.64 | 95.81 | 100.00 | 43.92 | 41.66 | 36.99 | 33.57 |

| | | | | | | | | | | |
|---|---|---|---|---|---|---|---|---|---|---|
| CTO is the catalyst/oil ratio. Gasoline is the amount of product (in wt%) having a boiling point in the range above the boiling point of n-pentane to 221°C. LCO (Light Cycle Oil) is the amount of product (in wt%) having a boiling point in the range of 221 to 340°C. Bottoms is the amount of product (in wt%) having a boiling point above 340 °C. Coke is the amount of coke formed on the catalyst. HCO (heavy cycle oil) is the fraction of the bottoms having a boiling point range of 340 to 496 °C. LCO/arom is the aromatics content of the light cycle oil fraction HCO/arom is the aromatics content of the heavy cycle oil fraction. | | | | | | | | | | |

### Example 2

Aluminum phosphate materials prepared as described above were modified by impregnation with La, Zn, and Zr, respectively. Their properties are summarized in Table 3.

**Table 3**

| | SA (m²/g) | M (wt%) | Al (wt%) | P (wt%) |
|---|---|---|---|---|
| AlPOx | 316 | 13 | 28 | 3 |
| LaAlPOx | 156 | 29 | 23 | 7 |
| ZnAlPOx | 200 | 13 | 38 | 1 |
| ZrAlPOx | 126 | 31 | 15 | 5 |

| | | | | |
|---|---|---|---|---|
| SA is the specific surface area, as measured by the BET method M is the amount of dopant metal Al is the amount of aluminum P is the amount of phosphorus | | | | |

As feedstock Crown VGO was used.

### Characteristics of Crown VGO

| SIMDIST, | °C |
|---|---|
| 10wt% | 320 |
| 20wt% | 353 |
| 30wt% | 374 |
| 40wt% | 393 |
| 50wt% | 414 |
| 60wt% | 437 |
| 70wt% | 457 |
| 80wt% | 476 |
| 90wt% | 512 |
| 95wt% | |
| FBP | 561 |
| | |
| SATURATES, wt% | 62.4 |
| MONO-AROMATICS, wt% | 17.0 |
| DI-AROMATICS, wt% | 11.1 |
| DI+-AROMATICS/POLARS, wt% | 9.4 |
| | |
| SULFUR, ppmwt | 6400 |
| NITROGEN, ppmwt | 1153 |
| CCR, wt% | 0.14 |

A silica magnesia material was prepared according to example 1 of US patent 2,901,440, with the exception that no HF was added before drying.

The catalyst materials were tested for their cracking activities, as described in Example 1. MAT experiments were carried out at contact temperatures of 500 and 550°C.

The LCO and HCO fractions were collected and analyzed for their aromatics content using two-dimensional gas chromatography.

The results are summarized in Table 4

**Table 4**

| | ZnAlPOₓ | ZnAlPOₓ | LaAlPOₓ | LaAlPOₓ | ZrAlPOₓ | ZrAlPOₓ | CeAlPOₓ | CeAlPOₓ |
|---|---|---|---|---|---|---|---|---|
| Temp | | | | | | | | |
| CTO | 11 | 10 | 11 | 19 | 10 | 19 | 11 | 5.7 |
| Dry gas | 2.5 | 4.3 | 2.5 | 3.1 | 3.5 | 2.7 | 3.3 | 2.1 |
| LPG | 3.4 | 5.4 | 3.6 | 4.9 | 4.1 | 4.6 | 6.7 | 4.1 |
| Gasoline | 14.6 | 17.2 | 15.2 | 20.8 | 16.7 | 18.1 | 25.5 | 15.8 |
| LCO | 29.8 | 27.7 | 30.3 | 33.9 | 30.8 | 31.9 | 28.4 | 29.6 |
| Bottoms | 38.8 | 36.4 | 42.1 | 28.7 | 38.7 | 35.0 | 17.1 | 42.1 |
| Coke | 11.0 | 9.1 | 6.4 | 8.6 | 6.2 | 7.6 | 19.0 | 6.2 |
| LCO/arom | 35.4 | 35.6 | 34.0 | 35.9 | 34.9 | 35.4 | 54.6 | 44.1 |
| HCO/arom | 37.0 | 40.0 | 36.8 | 39.1 | 39.9 | 35.9 | 36.3 | 36.0 |

| | | | | | | | | |
|---|---|---|---|---|---|---|---|---|
| Temp is de contact temperature (in °C). CTO is the catalyst/oil ratio. Dry gas is the amount of dry gas in the product stream (in wt%). LPG is the amount of liquefiable gas in the product stream (in wt%). Gasoline is the amount of product (in wt%) having a boiling point in the range above the boiling point of n-pentane to 221 °C. LCO (Light Cycle Oil) is the amount of product (in wt%) having a boiling point in the range of 221 to 340°C. Bottoms is the amount of product (in wt%) having a boiling point above 340°C. Coke is the amount of coke formed on the catalyst. HCO (heavy cycle oil) is the fraction of the bottoms having a boiling point range of 340 to 496°C. LCO/arom is the aromatics content of the light cycle oil fraction HCO/arom is the aromatics content of the heavy cycle oil fraction. | | | | | | | | |

The results show that doping aluminum phosphate with Zn, La, or Zr resulted in a material acting as a basic catalyst. The catalytic activity was low as compared to conventional FCC catalysts, thus requiring a rather high CTO ratio. The aromatic contents of both the LCO and the HCO fractions were desirably low.

Doping aluminum phosphate with Ce resulted in a catalyst tending more towards acidic characteristics, having a higher catalytic activity, and resulting in a higher aromatics content of the LCO fraction.

### Example 3

Hydrotalcite was prepared following the procedure described in US Patent 6,589,902. The Mg to Al ratio was 4:1. The hydrotalcite was calcined at 600 °C for one hour. As desired, metal ions were impregnated into the hydrotalcite by rehydrating the calcined hydrotalcite in an aqueous solution containing a salt of the desired metal.

A hydrofalcite-type Zn/Al mixed oxide was prepared using the same procedure, but replacing Mg with Zn.

The materials were tested in a microactivity tester (MAT) as described above. The contact temperature was 500 °C. The results are summarized in Table 5.

**Table 5**

| | ZnAlMo1 | ZnAlW2 | ZnAlV3 | MgAlFeW4 | MgAlFeV5 | MgAlV6 | MgAlMo7 |
|---|---|---|---|---|---|---|---|
| CTO | 11.19 | 11.18 | 11.18 | 11.18 | 11.19 | 11.18 | 11.18 |
| Gasoline | 17.15 | 17.68 | 17.08 | 16.47 | 15.62 | 18.49 | 16.71 |
| LCO | 30.01 | 33.49 | 30.29 | 30.61 | 28.96 | 32.36 | 30.66 |
| Bottoms | 31.56 | 33.30 | 25.06 | 26.10 | 23.67 | 26.27 | 26.21 |
| Coke | 15.81 | 9.17 | 21.02 | 20.43 | 25.40 | 16.21 | 19.01 |
| LCO/arom | 42.47 | 42.87 | 43.87 | 38.87 | 39.57 | 41.10 | 41.80 |
| HCO/arom | 37.14 | 36.32 | 40.58 | 39.05 | 40.66 | 42.98 | 40.66 |

1 Contained 1 % Mo
2 Contained 1 % W
3 Contained 1% V
4 Contained 4% Fe, 1 % W
5 Contained 4% Fe, 1 % V
6 Contained 5% V
7 Contained 5% Mo
8 Contained 5% W
9 Contained 5% P
10 Contained 1% Zr

Mg/Al hydrotalcite-based catalytic compositions tend to produce lower LCO aromatics contents than Zn/Al hydrotalcite based catalytic compositions.

### Example 4

Hydrotalcite materials doped with a range of metal ions were compared for coke make in the MAT. Materials doped with Fe, Mo, and Fe + Mo had significantly higher coke yields than materials doped with W, V, P, or Zr.

### Example 5

In the following examples the catalytic selectivity of HTC basic catalyst according to the present invention is evaluated in a Micro Fluid Simulation Test, the MST. The MST is deploys a fixed fluid bed micro-reactor which is tuned to provide realistic results in line with those from commercial FCC Units. More details can be found in "A Microscale Simulation Test for Fluid Catalytic Cracking, P. O'Connor, M.B. Hartkamp, ACS Symposium Series No. 419, 1989. The experiments were conducted at several cracking temperatures ranging from 480 °C to 560 °C.

As feedstocks a vacuum gasoil, Crown VGO and an atmospheric residue, Huabei AR, were used.

**Table 1, Characteristics of Crown VGO and Huabei Atmospheric Residue.**

| | Crown VGO | Huabei AR |
|---|---|---|
| IBP, °C | 228 | 231 |
| 5WT%, °C | 292 | 320 |
| 10WT% | 320 | 353 |
| 30WT% | 374 | 423 |
| 50WT% | 414 | 488 |
| 70WT% | 457 | 604 |
| 90WT% | 512 | 732 |
| FBP, oC | 561 | 761 |
| | | |
| Saturates, wt% | 62.4 | 74.8 |
| Mono-aromatics, wt% | 17.0 | 9.3 |
| Di-aromatics, wt% | 11.1 | 6.2 |
| Di+-aromatics/Polars, wt% | 9.4 | 9.7 |
| | | |
| Sulfur, ppm wt | 6400 | 2599 |
| Nitrogen, ppm wt | 1153 | 2643 |
| Conradson Carbon Residue, | 0.14 | 5.27 |
| wt% | | |
| Density at 15°C | 0.8998 | 0.8976 |

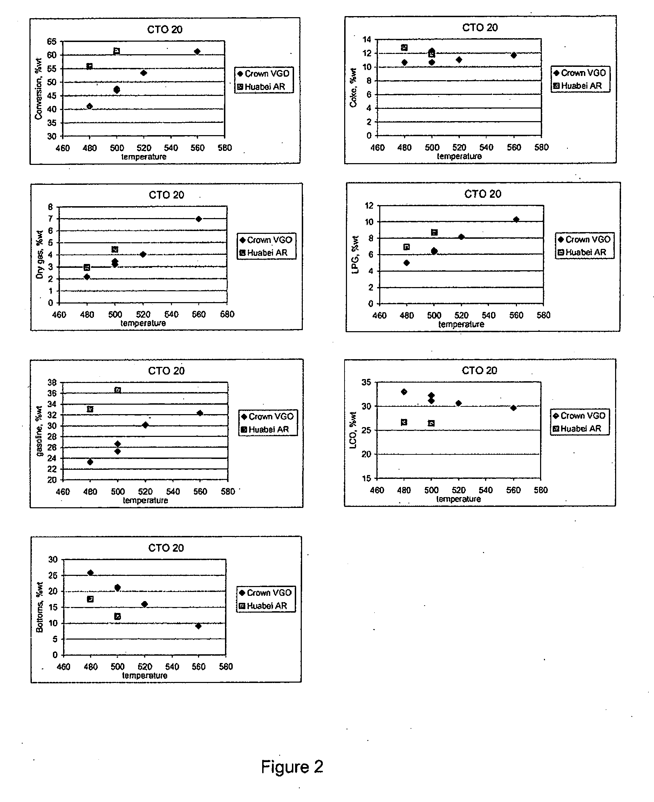

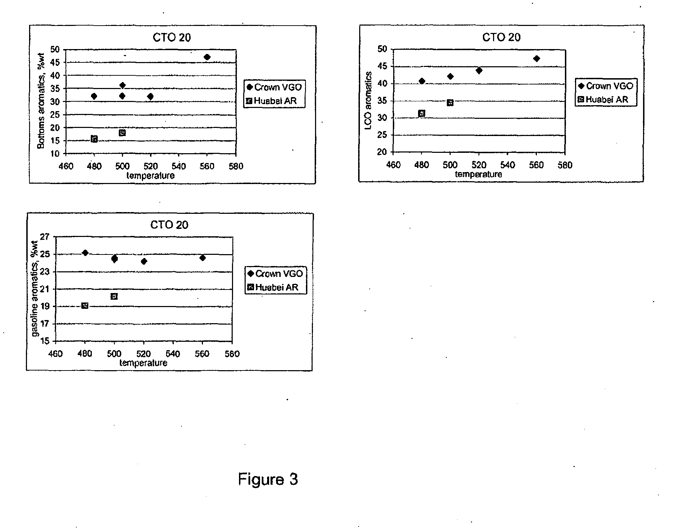

Hydrotalcite was prepared following the procedure described in US Patent 6,589,902. The Mg to Al ratio was 4:1. The hydrotalcite was calcined at 600 °C for one hour and used as catalyst in the experiments.
The reaction products were subjected to distillation. The LCO and HCO fractions were collected and analyzed for their aromatics content using two-dimensional gas chromatography. The dry gas, LPG and gasoline fractions were analyzed by GC. The coke yield was determined by analyzing the CO and CO₂ contents of the effluent of the regenerator under oxidizing conditions.
The yield structure is shown in Figure 2, while the aromatics content of gasoline, LCO and Bottoms are shown in figure 3. The comparisons are made at a CTO of 20 wt/wt.
Temperature is the catalyst bed temperature in °C
CTO is the catalyst/oil ratio in wt/wt.
Dry gas is the amount of dry gas in the product stream (in wt%).
LPG is the amount of liquefiable gas in the product stream (in wt%).
Gasoline is the amount of product (in wt%) having a boiling point in the range above the boiling point of pentane to 221 °C.
LCO (Light Cycle Oil) is the amount of product (in wt%) having a boiling point in the range of 221 to 350 °C.
Bottoms is the amount of product (in wt%) having a boiling point above 350 °C. Coke is the amount of coke (in wt%) produced.

The results in figure 2 show that the LCO yield is highest at low cracking temperature. The bottoms yield is then also highest. Note that the LCO yield is then nearly 35 wt% for Crown VGO feed at a low cracking temperature of 480 °C. The corresponding LCO aromatics content is about 40 wt%. The Bottoms yield is high at some 25 wt% while its aromatics content is low at around 31 wt%. This low aromatics bottoms can be easily cracked in a second stage.
For the Huabei atmospheric residue the LCO yield is about 26 wt%, the Bottoms yield around 18 wt%, the LCO aromatics content is some 31 wt% and the Bottoms aromatics content some 15 wt% at the same cracking conditions.
Conventional commercial FCC cracking is conducted in the cracking temperature range of 500 to 560 °C using a conventional acidic type zeolite containing catalyst. This is best simulated in the MST by using aforementioned zeolite containing catalyst, a bed temperature of some 560 °C and a CTO of 3 to 4 wt%. The LCO yield is then less than 20 wt% and the LCO aromatics content above 80 wt%. Hence by using a basic catalyst at mild conditions the LCO yield can be substantially reduced while its aromatics content is greatly reduced. The reduction in bottoms conversion is compensated by cracking the bottoms from the first stage in a second stage.

## Claims

1. An FCC process comprising the step of contacting an FCC feedstock with a catalytic composition, under FCC reaction conditions, said catalytic composition comprising a basic material, wherein said catalytic composition is substantially free of acidic zeolite, preferably wherein the basic material is supported on a carrier material, wherein the basic material is more basic than silica in the absence of additives or dopants, determined by titration according to K. Tanabe et al. "Studies in Surface Science and Catalysis, 51: New Acids and Bases" and wherein the number of basic sites is greater than the number of acidic sites,
wherein the basic material is selected from the group consisting of compounds of alkali metals, compounds of alkaline earth metals, compounds of trivalent metals, compounds of transition metals, and mixtures thereof;
wherein the transition metal compound is selected from the group consisting of ZrO₂, Y₂O₃, Nb₂O₅, and mixtures thereof;
wherein said catalytic composition is the combination of catalytic materials that is contacted with said FCC feedstock in said FCC process.

2. The process of claim 1, wherein the FCC reaction temperatures include a reaction temperature in the range of 400 - 600 °C.

3. The process according to claim 1 or 2, wherein the catalytic composition is substantially free of components having a dehydrogenating activity.

4. The process according to any one of the preceding claims wherein the basic material is a hydrotalcite or an aluminum phosphate.

5. The process according to any one of the preceding claims wherein the basic material is doped with a metal cation, preferably the metal cation dopant selected from metals of Group IIb, Group IIIb, Group IVb, the rare earth metals, and mixtures thereof, more preferably wherein the metal cation dopant is selected from the group consisting of La, Zn, Zr, and mixtures thereof.

6. The process according to any one of claims 1 through 5 wherein the basic material is supported on a carrier material, wherein the carrier material is a refractory oxide.

7. The process according to claim 6 wherein the carrier is selected from alumina, silica, silica-alumina, titania, and mixtures thereof,

8. The process of any one of the preceding claims further comprising a material having acidic sites.

9. The process of claim 8 wherein the material having acidic sites is selected from the group consisting of silica sol, metal doped silica sol, and nano-scale composites of silica with other refractory oxides.

10. The process of any of claims 1 to 9, wherein the FCC feedstock is selected from the group consisting of vacuum gas oil, hydrotreated vacuum gas oil, atmospheric resid feed, crude oil, shale oil, tar sand, and mixtures thereof.

11. The FCC process according to any one of claims 1 to 10 for cracking a feedstock selected from vacuum gasoils, hydrotreated vacuum gasoils, coker gasoils, atmospheric residues, vacuum residues and the hydrotreated products thereof, wherein said FCC process comprises an additional stage, **characterized in that** at least one of the stages is a fluid catalytic cracking process in which the catalytic composition as defined in any one of claims 1 - 9 is used.

12. The process according to claim 11 in which:
a. the first stage is operated at a reaction temperature of 460 to 900°C, preferably between 460 to 600°C, more preferably between 460 to 500 °C; or
b. both stages are FCC processes, and the second stage is operated at a reaction temperature of 480 to 900°C, more preferably between 500 to 600°C, even more preferably between 530 to 570°C.

13. The process according to claim 12, in which said FCC processes comprise a stripper and a regenerator, wherein the stripper temperature is adjusted between 520 to 600°C by routing some catalyst from the regenerator to the stripper.

14. The process according to claim 12 or 13 in which the catalyst in one of the stage is a traditional acidic zeolite-containing cracking catalyst.

15. The cracking process according to claim 12, wherein both stages are FCC processes and both stages use a catalytic composition as defined in any one of claims 1 - 9.

16. The cracking process according to claim 12 wherein:
a. one of the stages is a hydrocracking process;
b. one of the stages is a hydrocracking process wherein the first stage is a fluid catalytic cracking process, or
c. one of the stages is a hydrocracking process wherein the first stage is a hydrocracking process.

17. The process of any one of claims 1 to 16,
wherein the basic material is the oxide, the hydroxide or the phosphate of a transition metal, an alkali metal, an alkaline earth metal, or a transition metal, or a mixture thereof;

## Patentansprüche

1. FCC-Verfahren, umfassend den Schritt des Inkontaktbringens eines FCC-Ausgangsmaterials mit einer katalytischen Zusammensetzung unter FCC-Reaktionsbedingungen, wobei die katalytische Zusammensetzung ein basisches Material umfasst, wobei die katalytische Zusammensetzung im Wesentlichen frei von saurem Zeolith ist, bevorzugt wobei das basische Material auf einem Trägermaterial getragen wird, wobei das basische Material stärker basisch als Siliciumdioxid in der Abwesenheit von Additiven oder Dotiermitteln ist, bestimmt durch Titration gemäß K. Tanabe et al. "Studies in Surface Science and Catalysis, 51: New Acids and Bases", und wobei die Anzahl von basischen Stellen größer als die Anzahl von sauren Stellen ist, wobei das basische Material aus der Gruppe ausgewählt ist, welche aus Verbindungen von Alkalimetallen, Verbindungen von Erdalkalimetallen, Verbindungen von dreiwertigen Metallen, Verbindungen von Übergangsmetallen und Gemischen davon besteht; wobei die Übergangsmetallverbindung aus der Gruppe ausgewählt ist, welche aus ZrO₂, Y₂O₃, Nb₂O₅ und Gemischen davon besteht;
wobei die katalytische Zusammensetzung die Kombination von katalytischen Materialien, welche mit dem FCC-Ausgangsmaterial in dem FCC-Verfahren in Kontakt gebracht wird, ist.

2. Verfahren nach Anspruch 1, wobei die FCC-Reaktionstemperaturen eine Reaktionstemperatur im Bereich von 400 - 600°C einschließen.

3. Verfahren gemäß Anspruch 1 oder 2, wobei die katalytische Zusammensetzung im Wesentlichen frei von Komponenten mit einer Dehydrierungsaktivität ist.

4. Verfahren gemäß einem der vorhergehenden Ansprüche, wobei das basische Material ein Hydrotalcit oder ein Aluminiumphosphat ist.

5. Verfahren gemäß einem der vorhergehenden Ansprüche, wobei das basische Material mit einem Metallkation dotiert ist, wobei das Metallkation-Dotiermittel bevorzugt aus Metallen der Gruppe IIb, Gruppe IIIb, Gruppe IVb, den Seltenerdmetallen und Gemischen davon ausgewählt ist, wobei das Metallkation-Dotiermittel stärker bevorzugt aus der Gruppe ausgewählt ist, welche aus La, Zn, Zr und Gemischen davon besteht.

6. Verfahren gemäß einem der Ansprüche 1 bis 5, wobei das basische Material auf einem Trägermaterial getragen wird, wobei das Trägermaterial ein feuerfestes Oxid ist.

7. Verfahren gemäß Anspruch 6, wobei der Träger aus Aluminiumoxid, Siliciumdioxid, Siliciumdioxid-Aluminiumoxid, Titandioxid und Gemischen davon ausgewählt ist.

8. Verfahren nach einem der vorhergehenden Ansprüche, ferner umfassend ein Material mit sauren Stellen.

9. Verfahren nach Anspruch 8, wobei das Material mit sauren Stellen aus der Gruppe ausgewählt ist, welche aus Kieselsäuresol, Metall-dotiertem Kieselsäuresol und Verbundstoffen von Siliciumdioxid mit anderen feuerfesten Oxiden im Nanobereich besteht.

10. Verfahren nach einem der Ansprüche 1 bis 9, wobei das FCC-Ausgangsmaterial aus der Gruppe ausgewählt ist, welche aus Vakuumgasöl, hydrodesulfuriertem Vakuumgasöl, atmosphärischem Erdölresiduum, Rohöl, Schieferöl, Teersand und Gemischen davon besteht.

11. Das FCC-Verfahren gemäß einem der Ansprüche 1 bis 10 zum Cracken eines Ausgangsmaterials, welches aus Vakuumgasölen, hydrobehandelten Vakuumgasölen, Koker-Gasölen, atmosphärischen Residuums, Vakuumresiduums und den hydrobehandelten Produkten davon ausgewählt ist, wobei das FCC-Verfahren eine zusätzliche Stufe umfasst, **dadurch gekennzeichnet, dass** mindestens eine der Stufen ein fluidkatalytisches Krackverfahren, in welchem die katalytische Zusammensetzung wie in einem der Ansprüche 1 - 9 definiert verwendet wird, ist.

12. Verfahren gemäß Anspruch 11, wobei:
a. die erste Stufe bei einer Reaktionstemperatur von 460 bis 900°C, bevorzugt zwischen 460 bis 600°C, stärker bevorzugt zwischen 460 bis 500°C betrieben wird; oder
b. beide Stufen FCC-Verfahren sind und die zweite Stufe bei einer Reaktionstemperatur von 480 bis 900°C, stärker bevorzugt zwischen 500 bis 600°C, noch stärker bevorzugt zwischen 530 bis 570°C betrieben wird.

13. Verfahren gemäß Anspruch 12, wobei die FCC-Verfahren einen Stripper und einen Regenerator umfassen, wobei die Strippertemperatur zwischen 520 bis 600°C durch Leiten von etwas Katalysator vom Regenerator zum Stripper eingestellt wird.

14. Verfahren gemäß Anspruch 12 oder 13, wobei der Katalysator in einer der Stufen ein herkömmlicher saurer Zeolith-enthaltender Crackkatalysator ist.

15. Crackverfahren gemäß Anspruch 12, wobei beide Stufen FCC-Verfahren sind und beide Stufen eine katalytische Zusammensetzung wie in einem der Ansprüche 1 - 9 definiert verwenden.

16. Crackverfahren gemäß Anspruch 12, wobei:
a. eine der Stufen ein Hydrocrackverfahren ist,
b. eine der Stufen ein Hydrocrackverfahren ist, wobei die erste Stufe ein fluidkatalytisches Crackverfahren ist, oder
c. eine der Stufen ein Hydrocrackverfahren ist, wobei die erste Stufe ein Hydrocrackverfahren ist.

17. Verfahren nach einem der Ansprüche 1 bis 16, wobei das basische Material das Oxid, das Hydroxid oder das Phosphat eines Übergangsmetalls, eines Alkalimetalls, eines Erdalkalimetalls oder eines Übergangsmetalls, oder ein Gemisch davon ist.

## Revendications

1. Procédé FCC comprenant l'étape consistant à mettre en contact une charge d'alimentation FCC avec une composition catalytique, dans des conditions de réaction FCC, ladite composition catalytique comprenant un matériau basique, dans lequel ladite composition catalytique est essentiellement exempte de zéolite acide, de préférence dans lequel le matériau basique est supporté sur un matériau support, dans lequel le matériau basique est plus basique que la silice en l'absence d'additifs ou de dopants, déterminé par titration d'après K. Tanabe *et al.* "Studies in Surface Science and Catalysis, 51: New Acids and Bases", et dans lequel le nombre de sites basiques est plus grand que le nombre de sites acides ;
dans lequel le matériau basique est choisi dans le groupe constitué par les composés de métaux alcalins, les composés de métaux alcalino-terreux, les composés de métaux trivalents, les composés de métaux de transition, et des mélanges de ceux-ci ;
dans lequel le composé de métal de transition est choisi dans le groupe constitué par ZrO₂, Y₂O₃, Nb₂O₅, et des mélanges de ceux-ci ;
dans lequel ladite composition catalytique est la combinaison de matériaux catalytiques qui est mise en contact avec ladite charge d'alimentation FCC dans ledit procédé FCC.

2. Procédé selon la revendication 1, dans lequel les températures de réaction FCC incluent une température de réaction dans la gamme de 400 à 600 °C.

3. Procédé selon la revendication 1 ou 2, dans lequel la composition catalytique est essentiellement exempte de constituants ayant une activité déshydrogénante.

4. Procédé selon l'une quelconque des revendications précédentes, dans lequel le matériau basique est une hydrotalcite ou un phosphate d'aluminium.

5. Procédé selon l'une quelconque des revendications précédentes, dans lequel le matériau basique est dopé avec un cation métallique, le cation métallique dopant étant de préférence choisi parmi les métaux du groupe IIb, du groupe IIIb, du groupe IVb, les métaux des terres-rares, et des mélanges de ceux-ci, de préférence encore dans lequel le cation métallique dopant est choisi dans le groupe constitué par La, Zn, Zr, et des mélanges de ceux-ci.

6. Procédé selon l'une quelconque des revendications 1 à 5, dans lequel le matériau basique est supporté sur un matériau support, dans lequel le matériau support est un oxyde réfractaire.

7. Procédé selon la revendication 6, dans lequel le support est choisi parmi l'alumine, la silice, la silice-alumine, l'oxyde de titane, et des mélanges de ceux-ci.

8. Procédé selon l'une quelconque des revendications précédentes, comprenant en outre un matériau ayant des sites acides.

9. Procédé selon la revendication 8, dans lequel le matériau ayant des sites acides est choisi dans le groupe constitué par un sol de silice, un sol de silice dopé par un métal, et les composites à l'échelle nanométrique de silice avec d'autres oxydes réfractaires.

10. Procédé selon l'une quelconque des revendications 1 à 9, dans lequel la charge d'alimentation FCC est choisie dans le groupe constitué par un gas-oil sous vide, un gas-oil sous vide hydrotraité, une charge d'huile résiduelle atmosphérique, un pétrole brut, une huile de schiste, un sable bitumineux, et des mélanges de ceux-ci.

11. Procédé FCC selon l'une quelconque des revendications 1 à 10, pour craquer une charge d'alimentation choisie parmi les gas-oils sous vide, les gas-oils sous vide hydrotraités, les gas-oils de four à coke, les résidus atmosphériques, les résidus sous vide et les produits hydrotraités de ceux-ci, dans lequel ledit procédé FCC comprend un stade supplémentaire, **caractérisé en ce qu'**au moins l'un des stades est un procédé de craquage catalytique fluide dans lequel la composition catalytique selon l'une quelconque des revendications 1 à 9 est utilisée.

12. Procédé selon la revendication 11, dans lequel :
a. le premier stade est effectué à une température de réaction de 460 à 900 °C, de préférence de 460 à 600 °C, de préférence encore de 460 à 500 °C ; ou
b. les deux stades sont des procédés FCC, et le second stade est effectué à une température de réaction de 480 à 900 °C, de préférence encore de 500 à 600 °C, de préférence encore de 530 à 570 °C.

13. Procédé selon la revendication 12, dans lequel lesdits procédés FCC comprennent un épurateur et un régénérateur, dans lequel la température de l'épurateur est ajustée de 520 à 600 °C en véhiculant un peu de catalyseur depuis le régénérateur jusqu'à l'épurateur.

14. Procédé selon la revendication 12 ou 13, dans lequel le catalyseur dans l'un des stades est un catalyseur de craquage contenant une zéolite acide traditionnel.

15. Procédé de craquage selon la revendication 12, dans lequel les deux stades sont des procédés FCC et les deux stades utilisent une composition catalytique selon l'une quelconque des revendications 1 à 9.

16. Procédé de craquage selon la revendication 12, dans lequel :
a. l'un des stades est un procédé d'hydrocraquage ;
b. l'un des stades est un procédé d'hydrocraquage dans lequel le premier stade est un procédé de craquage catalytique fluide, ou
c. l'un des stades est un procédé d'hydrocraquage dans lequel le premier stade est un procédé d'hydrocraquage.

17. Procédé selon l'une quelconque des revendications 1 à 16, dans lequel le matériau basique est l'oxyde, l'hydroxyde ou le phosphate d'un métal de transition, d'un métal alcalin, d'un métal alcalino-terreux ou d'un métal de transition, ou d'un mélange de ceux-ci.
